# EUROPEAN PATENT SPECIFICATION

(11) **EP 3 199 395 B1**
(45) Date of publication and mention of the grant of the patent: **19.09.2018**
(21) Application number: 16382035.0
(22) Date of filing: 29.01.2016
(51) Int. Cl.: B60K 11/08

(54) **SHUTTER DEVICE FOR A FRONT GRILLE OF A VEHICLE**
VERSCHLUSSVORRICHTUNG FÜR EIN FRONTGITTER EINES FAHRZEUGS
DISPOSITIF D'OBTURATION POUR UNE GRILLE FRONTALE D'UN VÉHICULE

(43) Date of publication of application: 02.08.2017
(73) Proprietor: Batz, S.Coop., 48140 Igorre (ES)
(72) Inventor: IBAÑEZ MOREIRA, Jesús, 48160 DERIO (ES); AGUIRRE PICHEL, Iñaki, 48980 SANTURTZI (ES)
(74) Representative: Igartua, Ismael

(56) References cited:
- EP-A1- 0 605 325
- DE-A1-102013 110 467
- DE-A1-102014 108 575
- US-A1- 2012 019 025
- US-A1- 2013 146 375
- US-A1- 2013 284 401

## Description

### TECHNICAL FIELD

The present invention relates to a shutter device for a front grille of a motor vehicle.

### PRIOR ART

Shutter devices that are arranged between the front grille and the radiator of a vehicle are known. Said shutter devices control the passage of air from the front grille to the radiator which is responsible for dissipating heat from the vehicle engine depending on said engine cooling needs.

Shutter devices allow reducing fuel consumption of the vehicle by optimizing vehicle aerodynamics when engine cooling needs allow it.

Shutter devices comprising a frame and a plurality of flaps coupled in a pivoting manner to said frame and positioned to obtain the airflow required for cooling the radiator of the engine are known. These shutter devices also comprise an actuator and a transmitting part for transmitting the movement of the actuator to the flaps.

US2014/0216834A1 discloses a shutter device in which the actuator is coupled to one of the flaps, referred to as drive flap. Since all the flaps are coupled to the transmitting part, the movement of the drive flap is transmitted to the rest of the flaps through said transmitting part.

In addition, US2013/0146375A1 describes a shutter device in which the actuator is coupled to the transmitting part. Since the flaps are coupled to the transmitting part, when the actuator moves the transmitting part the movement is transmitted to all the flaps. The shutter device described therein has the option of decoupling the flaps from the transmitting part when a failure of the actuator is detected.

US20120019025A1 discloses an assembly for vehicles that has a component including an energy absorbing section and a shutter section, where the energy absorbing section includes a crush section to absorb energy when crushed against a bumper reinforcement beam i.e. B-shaped beam. The shutter section includes active shutter members i.e. vanes, movable between a closed position to block airflow through the shutter section, and an open position to allow air flow through the shutter section. The bumper reinforcement beam is provided on a front of the vehicle frame.

US20130284401A1 discloses a shutter that has linear lamellae that are formed in two groups on opposite sides of an actuator. The entrainer is provided at a distance in reference to the longitudinal direction of the lamellae. A coupling element connecting the parallel lamellae with each other are engaged, so that an adjustment motion triggered by the actuator is transmitted to parallel lamella. The bearing tappets of the lamella ends are inserted in a bearing recess open perpendicular to the bearing axis in a lateral wall of the shutter frame.

DE102014108575A1 discloses a radiator blind arrangement that has a supporting structure, at which the radiator blinds are fixed between an open position and a closed position in a movable manner. A drive is coupled through a transmission device with the radiator blinds. The transmission device has a coupling frame with a coupling element. The coupling element is coupled at an end of a pivot arm.

DE102013110467A1 discloses an active air flap device comprising a first flap installed at a leading end of a vehicle and rotated by force of an actuator to open or close. A second flap is installed at adjacent position of the first flap and configured such that the second flap is rotated to open or close. A linking module) is connected to respective flaps at respective ends, so that the module moves upward and downward. An adjustable unit is provided in a center portion of the module such that the unit connects and disconnects respective connecting links of the respective flaps.

EP0605325A1 discloses an airflow regulator comprising a series of shutters pivoted to a supporting frame that can move between open and closed positions. The supporting frame has a series of parallel transverse bars connected to end supports, with each shutter connected to a transverse bar by a flexible hinge which is moulded together with the shutter and bar. Each transverse bar has a U-shaped cross-section, with the open end of the U facing away from the direction of the airflow. Each shutter is hinged to a transverse bar at a point close to the lower end of one wall of its U-shaped section, pivoting through about a quarter of a turn between its open and closed positions. Each transverse bar can have transverse reinforcing ribs, and the shutters can be made in the form of flat rectangular vanes with reinforcing ribs.

### DISCLOSURE OF THE INVENTION

The object of the invention is to provide a shutter device for a front grille of a vehicle, as defined in the claims.

The shutter device of the invention comprises a frame and a plurality of flaps coupled in a pivoting manner to said frame and suitable for pivoting between an airflow blocking position and an open position.

The shutter device furthermore comprises an actuator and a transmitting part for transmitting the movement of the actuator to the flaps.

The transmitting part is coupled to each flap through a respective elastic claw, such that if one of the flaps jams and cannot pivot when it goes from the blocking position to the open position, said flap is decoupled from the elastic claw of the transmitting part, allowing the rest of the flaps to pivot. Each elastic claw is oriented such that the path it follows when it goes from the blocking position to the open position coincides with its path of decoupling from the respective flap, and the path it follows when it goes from the open position to the blocking position coincides with its path of coupling to the respective flap.

The flaps can jam for different reasons, such as dirt, ice, etc. When a flap jams, it cannot pivot with respect to the frame. In the present state of the art, since all the flaps are coupled to the transmitting part, if one flap jams and cannot be decoupled from the transmitting part, the entire assembly is immobilized. If one flap jams when the flaps are in the air blocking position, the consequences can be critical if the engine requires air for cooling thereof, being able to cause the engine to overheat.

As a result of the fact that jammed flaps can be individually decoupled from the transmitting part in the shutter device of the invention, if one of the flaps jams, it will be decoupled from the transmitting part, the remaining flaps being able to pivot, therefore preventing the risk of damaging the engine if a flap jams when the flaps are in the air blocking position.

These and other advantages and features of the invention will become evident in view of the drawings and of the detailed description of the invention.

### DESCRIPTION OF THE DRAWINGS

Figure 1 shows a rear view of the shutter device according to one embodiment of the invention, where the flaps are in the airflow blocking position.
Figure 2 shows a rear view of the shutter device of Figure 1, where the flaps are in the open position.
Figure 3 shows a front view of the shutter device of Figure 1, where the flaps are in the airflow blocking position.
Figure 4 shows a front view of the shutter device of Figure 1, where the flaps are in the open position.
Figure 5 shows a partial rear view of the shutter device of Figure 1.
Figure 6 shows a front view of the frame of the shutter device of Figure 1.
Figure 7 shows a first view of the transmitting part of the shutter device of Figure 1.
Figure 8 shows a second view of the transmitting part of the shutter device of Figure 1.

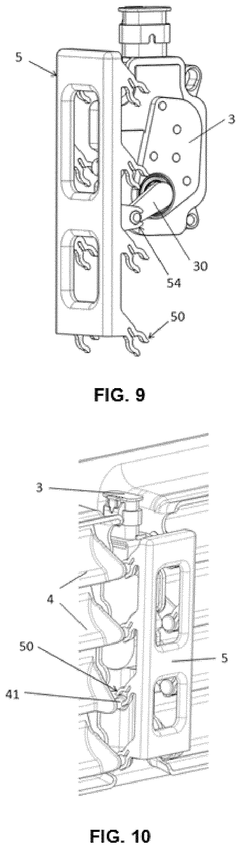

Figure 9 shows a view of the transmitting part and the actuator of the shutter device of Figure 1.
Figure 10 shows a partial rear view of the shutter device of Figure 1, where one of the flaps is decoupled from the transmitting part.

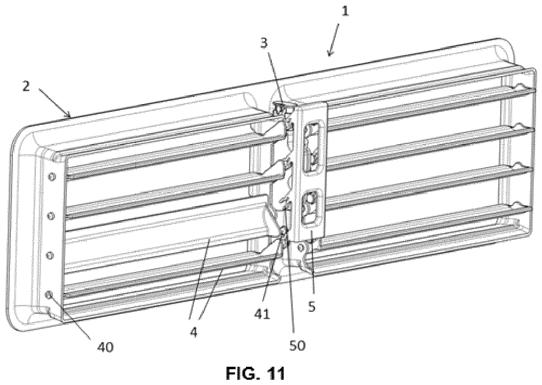

Figure 11 shows a rear view of the shutter device of Figure 1, where the flaps are in the open position except one flap which is decoupled from the transmitting part.

### DETAILED DISCLOSURE OF THE INVENTION

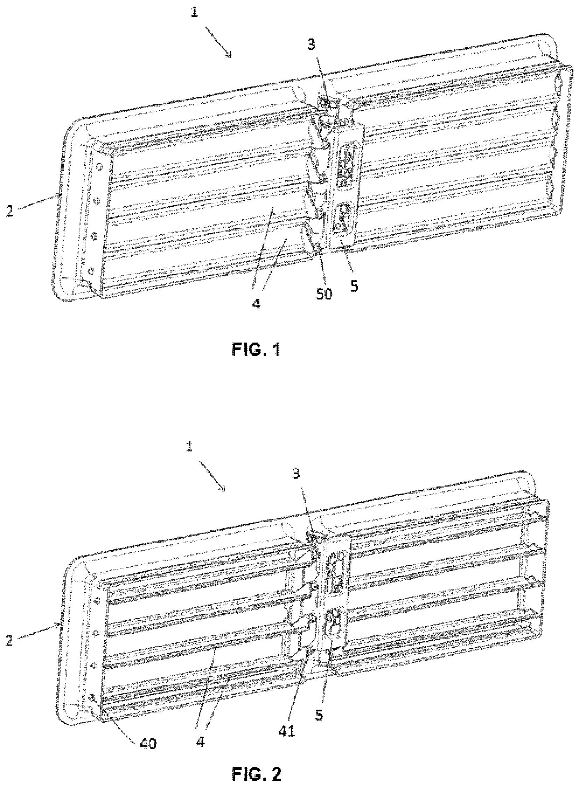

Figures 1 to 4 show an embodiment of the shutter device 1 for a front grille of a motor vehicle.

The shutter device 1 of this embodiment is suitable for being arranged between the front grille and the vehicle engine. In other embodiments, the shutter device can be integrated in the actual front grille of the vehicle.

The shutter device 1 controls the passage of air from the front grille to the radiator of the engine depending on vehicle engine cooling needs. Therefore, the shutter device 1 allows reducing fuel consumption of the vehicle by optimizing vehicle aerodynamics, because when engine cooling needs allow it, i.e., when the engine does not require airflow for cooling thereof, it blocks the passage of air, reducing the aerodynamic resistance of the vehicle. In contrast, when the engine requires air for cooling thereof, the shutter device 1 allows the passage of air, obtaining correct engine cooling.

The shutter device 1 comprises a frame 2 and a plurality of flaps 4 coupled in a pivoting manner to said frame 2 and suitable for pivoting between an airflow blocking position, shown in Figure 1, in which the passage of air is not allowed, and an open position, shown in Figure 2, in which the passage of air is allowed.

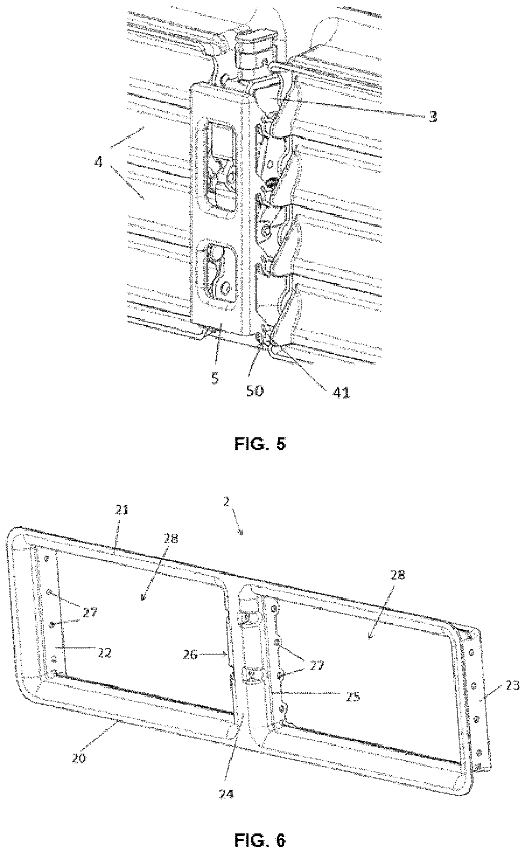

In this embodiment, the frame 2, shown in detail in Figure 6, comprises two longitudinal walls 20 and 21 and two transverse walls 22 and 23. The frame 2 furthermore comprises a central column comprising a front wall 24 and two central walls 25 and 26, said central walls 25 and 26 being arranged facing the transverse walls 22 and 23. Therefore, the frame 2 comprises two rectangular openings 28 bound by said longitudinal walls 20 and 21, transverse walls 22 and 23 and central walls 25 and 26.

As previously described, the flaps 4 are arranged coupled in a pivoting manner to said frame 2. To that end, in this embodiment the frame 2 comprises coupling holes 27 in its transverse walls 22 and 23 and central walls 25 and 26. Each flap 4 comprises at each end a fixing shaft 40 that is housed in respective coupling holes 27.

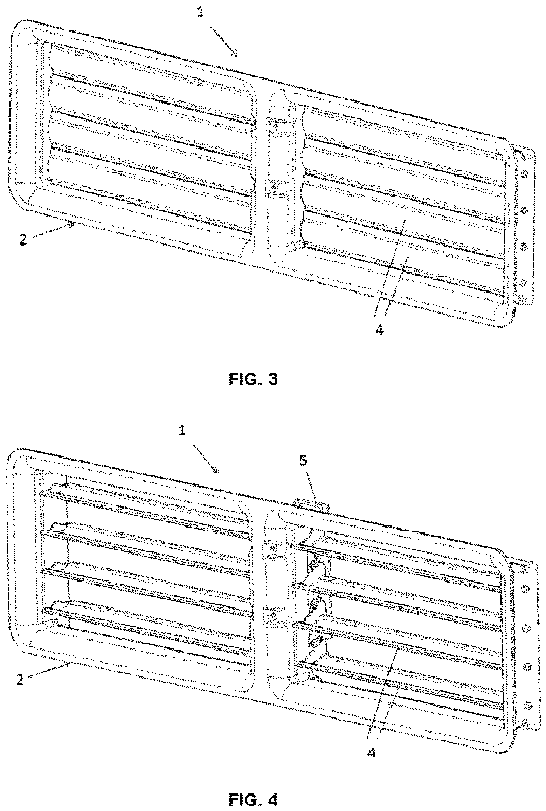

Figures 1 and 3 show the shutter device 1 when the flaps 4 are in the airflow blocking position. In this position, the flaps 4 completely cover the openings 28 of the frame 2, preventing the air from going through the shutter device 1. In this embodiment, in the blocking position, the flaps 4 are arranged parallel to the front wall 24 of the frame 2.

Figures 2 and 4 show the shutter device 1 when the flaps 4 are in the open position. In this position, the air can go through the shutter device 1. In this embodiment, in the open position, the flaps 4 are arranged perpendicular to the front wall 24 of the frame 2.

In this embodiment the flaps 4 can take intermediate positions between the blocking position, shown in Figures 1 and 3, and the open position, shown in Figures 2 and 4. Therefore, depending on vehicle engine cooling needs, i.e., depending on the amount of air required, the flaps 4 can pivot and be positioned in a more or less tilted position with respect to the front wall 24.

In order to pivot the flaps 4, the shutter device 1 comprises an actuator 3 and a transmitting part 5 for transmitting the movement of the actuator 3 to the flaps 4. In this embodiment, the actuator 3 is arranged in the central column of the frame 2. The control of the vehicle will command the movements of the actuator 3 of the shutter device 1 which are required for positioning the flaps 4 based on said vehicle engine cooling needs.

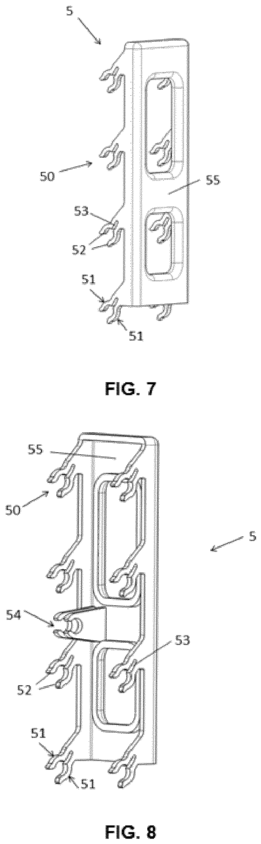

The transmitting part 5, shown in detail in Figures 7 and 8, is coupled to each flap 4 through a respective elastic claw 50, such that if one of the flaps 4 jams and cannot pivot when it goes from the blocking position to the open position, said flap 4 is decoupled from the elastic claw 50 of the transmitting part 5, allowing the rest of the flaps 4 to pivot. Therefore, one jammed flap 4 cannot prevent the remaining flaps 4 from being able to pivot. The flaps 4 can jam or be immobilized for various reasons, such as, for example, due to dirt, ice, etc. A shutter device 1 that can work even when a flap 4 is jammed is thereby obtained. That is particularly advantageous when the flaps 4 are in the air blocking position, because if it is necessary to pivot the flaps 4 so that air passes to the vehicle engine due to cooling needs while in the blocking position, it could be done despite the fact that one or several flaps 4 are jammed, such that possible damage to the vehicle engine due to overheating could be prevented.

In this embodiment, the transmitting part 5 comprises an elongated body 55 from which the elastic claws 50 project, the elongated body 55 and the elastic claws 50 being formed in one piece. The elastic claws 50 project from each longitudinal side of the body 55. In a preferred embodiment, the transmitting part 5 is made of plastic, preferably being produced by compression injection molding.

Although the elastic claws 50 in this preferred embodiment have elastic properties due to the material used, in the context of the invention an "elastic claw" must be construed as any claw having the elastic properties required for allowing that, when the flaps go from the blocking position to the open position, they are able to fulfill the function of driving the respective flap if the flap is not jammed, and at the same time to allow the decoupling of said flap if it is jammed, regardless of whether or not the actual material from which the claws are made is elastic.

In this embodiment, each elastic claw 50 is oriented such that the path it follows when it goes from the blocking position to the open position coincides with its path of decoupling from the respective flap 4, and the path it follows when it goes from the open position to the blocking position coincides with its path of coupling to the respective flap 4.

In this embodiment, each flap 4 comprises a coupling shaft 41 for the coupling thereof to the transmitting part 5. Furthermore, each elastic claw 50 comprises two arms 51 arranged like a clamp which form a U-shaped housing in which the coupling shaft 41 of the respective flap 4 is housed. In other possible embodiments, the elastic claws could have another shape.

With the elastic claw 50 being oriented in this manner, and specifically with the opening of the clamp forming the arms 51 of the elastic claw 50 being oriented in this manner, not only does it achieve a jammed flap 4 being able to be decoupled from the transmitting part 5 when it goes from the blocking position to the open position, but rather it also enables a decoupled flap 4 from being able to be coupled to the transmitting part 5 again when the transmitting part 5 returns to the blocking position, such that the next time the transmitting part 5 moves, if the flap 4 is no longer jammed, it can pivot together with the remaining flaps 4. A shutter device 1 is thereby achieved in which said device not only allows the decoupling of the jammed flaps 4 so that a jammed flap 4 does not immobilize the entire assembly, but rather it also allows the re-coupling of the decoupled flaps 4 upon returning to the blocking position.

As stated above, in this embodiment the elastic claws 50 are oriented such that the jammed flaps 4 can be decoupled from the transmitting part 5 when said jammed flaps 4 go from the blocking position to the open position. If one flap 4 jams when the flaps 4 are in the open position, said flap 4 cannot be decoupled from the transmitting part 5, and therefore the entire assembly will be immobilized. This situation is not critical because no element of the vehicle can be damaged due to this situation, although aerodynamic optimization is not achieved. Once the jammed flap 4 is able to pivot, the shutter device 1 can return to its normal operation.

To facilitate re-coupling of the decoupled flaps 4, the arms 51 of the elastic claws 50 of this embodiment comprise a chamfer 52 at the outer ends. Therefore, when a flap 4 is decoupled from the transmitting part 5 and the transmitting part 5 returns to the blocking position, the chamfer 52 at the ends of the arms 51 of the elastic claws 50 guides the coupling shaft 41 of the flap 4 to the U-shaped housing of the respective elastic claw 50.

In this embodiment, in order to remove the elasticity of the elastic claws 50, each elastic claw 50 comprises a notch 53 that weakens the area close to the arms 51 such that it facilitates the clamp function of clamp of said elastic claw 50, facilitating the flaps 4 being able to be decoupled from and again be coupled to the transmitting part 5.

In this embodiment, the actuator 3 comprises an end of a crank 30 coupled at the output thereof. The transmitting part 5 comprises a housing 54 in which the opposite end of said crank 30 is housed, such that the movement of the actuator 3 is transmitted to the transmitting part 5.

Preferably, the frame 2 and the flaps 4 of the shutter device 1 are made of plastic, like the transmitting part 5. Preferably, said parts are made by compression injection molding.

In other embodiments, the actuator could be coupled directly to a drive flap. In this case, the movement of the drive flap would be transmitted to the transmitting part and it would be transmitted to the remaining flaps of the shutter device by means of said transmitting part. In this case, the features of the transmitting part would be the same as those of the described embodiment.

The invention also relates to a motor vehicle comprising the described shutter device.

## Claims

1. Shutter device for a front grille of a vehicle, comprising a frame (2), a plurality of flaps (4) coupled in a pivoting manner to said frame (2) and suitable for pivoting between an airflow blocking position and an open position, an actuator (3), and a transmitting part (5) for transmitting the movement of the actuator (3) to the flaps (4), whereby the transmitting part (5) is coupled to each flap (4) through a respective elastic claw (50), **characterized in that** the transmitting part (5) is coupled to each flap (4) through a respective elastic claw (50), such that if one of the flaps (4) jams and cannot pivot when it goes from the blocking position to the open position, said flap (4) is decoupled from the elastic claw (50) of the transmitting part (5), allowing the rest of the flaps (4) to pivot, each elastic claw (50) being oriented such that the path it follows when it goes from the blocking position to the open position coincides with its path of decoupling from the respective flap (4), and the path it follows when it goes from the open position to the blocking position coincides with its path of coupling to the respective flap (4).

2. Shutter device according to claim 1, wherein each flap (4) comprises a coupling shaft (41) and each elastic claw (50) comprises two arms (51) arranged like a clamp which form a U-shaped housing in which the coupling shaft (41) of the respective flap (4) is housed.

3. Shutter device according to claim 2, wherein the arms (51) of the elastic claws (50) comprise a chamfer (52) at the outer ends.

4. Shutter device according to claim 2 or 3, wherein each elastic claw (50) comprises a notch (53) in the vicinity of the arms (51).

5. Shutter device according to any of the preceding claims, wherein the transmitting part (5) comprises an elongated body (55) from which the elastic claws (50) project.

6. Shutter device according to the preceding claim, wherein the elongated body (55) and the elastic claws (50) are formed in once piece.

7. Shutter device according to claim 5 or 6, wherein the elastic claws (50) project from each longitudinal side of the body (55).

8. Shutter device according to any of the preceding claims, wherein the transmitting part (5) is made of plastic.

9. Shutter device according to the preceding claim, wherein the transmitting part (5) is made by injection, preferably by compression injection molding.

10. Shutter device according to any of the preceding claims, wherein the actuator (3) comprises an end of crank (30) coupled at the output thereof, and the transmitting part (5) comprises a housing (54) in which the opposite end of said crank (30) is housed, such that the movement of the actuator (3) is transmitted to the transmitting part (5).

11. Shutter device according to any of the preceding claims, wherein the frame (2) comprises two openings (28) and a central column arranged between said openings (28), the flaps (4) being arranged in said openings (28) and the actuator (3) and the transmitting part (5) being arranged in said central column.

12. Motor vehicle **characterized in that** it comprises a shutter device according to any of the preceding claims.

## Patentansprüche

1. Verschlußvorrichtung für ein Frontgitter eines Fahrzeugs, umfassend einen Rahmen (2), eine Vielzahl von Klappen (4), welche verschwenkbar mit dem genannten Rahmen (2) gekoppelt sind und dafür geeignet sind, zwischen einer Luftstromsperrstellung und einer Offenstellung zu verschwenken, einen Aktuator (3) und ein Übertragungsteil (5) zum Übertragen der Bewegung des Aktuators (3) auf die Klappen (4), wodurch das Übertragungsteil (5) mit jeder Klappe (4) über eine jeweilige elastische Klaue (50) gekoppelt ist, **dadurch gekennzeichnet, dass** das Übertragungsteil (5) mit jeder Klappe (4) über eine jeweilige elastische Klaue (50) gekoppelt ist, so dass wenn sich eine der Klappen (4) verklemmt und nicht verschwenken kann, wenn sie von der Sperrstellung zur Offenstellung geht, die genannte Klappe (4) von der elastischen Klaue (50) des Übertragungsteils (5) entkoppelt wird, so dass erlaubt wird, dass der Rest der Klappen (4) verschwenken können, wobei jede elastische Klaue (50) derart ausgerichtet ist, dass die Bewegungsbahn, welche sie folgt, wenn sie von der Sperrstellung zur Offenstellung geht, mit ihrer Entkopplungsbewegungsbahn der jeweiligen Klappe (4) übereinstimmt, und die Bewegungsbahn, welche sie folgt, wenn sie von der Offenstellung zur Sperrstellung geht, mit ihrer Kopplungsbewegungsbahn der jeweiligen Klappe (4) übereinstimmt.

2. Verschlußvorrichtung nach Anspruch 1, wobei jede Klappe (4) eine Kopplungswelle (41) umfasst und jede elastische Klaue (50) zwei Arme (51) umfasst, welche in der Art einer Klemme angeordnet sind, welche eine U-förmige Aufnahme bilden, in welcher die Kopplungswelle (41) der jeweiligen Klappe (4) aufgenommen ist.

3. Verschlußvorrichtung nach Anspruch 2, wobei die Arme (51) der elastischen Klauen (50) eine Abschrägung (52) an den äußeren Enden umfassen.

4. Verschlußvorrichtung nach Anspruch 2 oder 3, wobei jede elastische Klaue (50) eine Kerbe (53) in der Nähe der Arme (51) umfasst.

5. Verschlußvorrichtung nach einem der vorhergehenden Ansprüche, wobei das Übertragungsteil (5) einen länglichen Körper (55) umfasst, vom welchen aus die elastischen Klauen (50) herausragen.

6. Verschlußvorrichtung nach dem vorhergehenden Anspruch, wobei der längliche Körper (55) und die elastischen Klauen (50) einstückig gebildet sind.

7. Verschlußvorrichtung nach Anspruch 5 oder 6, wobei die elastischen Klauen (50) aus jeder Längsseite des Körpers (55) herausragen.

8. Verschlußvorrichtung nach einem der vorhergehenden Ansprüche, wobei das Übertragungsteil (5) aus Kunststoff hergestellt ist.

9. Verschlußvorrichtung nach dem vorhergehenden Anspruch, wobei das Übertragungsteil (5) mittels Spritzens, vorzugsweise mittels Spritzprägens, hergestellt ist.

10. Verschlußvorrichtung nach einem der vorhergehenden Ansprüche, wobei der Aktuator (3) ein Ende einer Kurbel (30) umfasst, welches am Ausgang desselben gekoppelt ist, und das Übertragungsteil (5) eine Aufnahme (54) umfasst, in welcher das gegenüberliegende Ende der genannten Kurbel (30) aufgenommen ist, so dass die Bewegung des Aktuators (3) auf das Übertragungsteil (5) übertragen wird.

11. Verschlußvorrichtung nach einem der vorhergehenden Ansprüche, wobei der Rahmen (2) zwei Öffnungen (28) und eine zentrale Säule, welche zwischen den genannten Öffnungen (28) angeordnet ist, umfasst, wobei die Klappen (4) in den genannten Öffnungen (28) angeordnet sind und wobei der Aktuator (3) und das Übertragungsteil (5) in der genannten zentralen Säule angeordnet sind.

12. Motorfahrzeug, **dadurch gekennzeichnet, dass** es eine Verschlußvorrichtung nach einem der vorhergehenden Ansprüche umfasst.

## Revendications

1. Dispositif obturateur pour une calandre d'un véhicule, comprenant un châssis (2), une pluralité de volets (4) couplés d'une manière pivotante audit châssis (2) et appropriés pour pivoter entre une position de blocage de flux d'air et une position ouverte, un actionneur (3), et une partie émettrice (5) pour transmettre le mouvement de l'actionneur (3) au volets (4), selon lequel la partie émettrice (5) est couplée à chaque volet (4) à travers une griffe élastique respective (50), **caractérisé en ce que** la partie émettrice (5) est couplée à chaque volet (4) à travers une griffe élastique respective (50), de manière que si l'un des volets (4) se bloque et ne peut pas pivoter lorsqu'il va de la position de blocage à la position ouverte, ledit volet (4) est découplé de la griffe élastique (50) de la partie émettrice (5), permettant le pivotement du reste des volets (4), chaque griffe élastique (50) étant orientée de manière à ce que la trajectoire qu'il suit lorsqu'il va de la position de blocage à la position ouverte coïncide avec sa trajectoire de couplage au volet respectif (4).

2. Dispositif obturateur selon la revendication 1, dans lequel chaque volet (4) comprend un arbre de couplage (41) et chaque griffe élastique (50) comprend deux bras (51) aménagés comme une pince qui forment un logement en forme de U dans lequel est logé l'arbre de couplage (41) du volet respectif (4).

3. Dispositif obturateur selon la revendication 2, dans lequel les bras (51) des griffes élastiques (50) comprennent un chanfrein (52) aux extrémités extérieures.

4. Dispositif obturateur selon les revendications 2 ou 3, dans lequel chaque griffe élastique (50) comprend une entaille (53) à proximité des bras (51).

5. Dispositif obturateur selon l'une quelconque des revendications précédentes, dans lequel la partie émettrice (5) comprend un corps allongé (55) à partir duquel se projettent les griffes élastiques (50).

6. Dispositif obturateur selon la revendication précédente, dans lequel le corps allongé (55) et les griffes élastiques (50) sont formés en une seule pièce.

7. Dispositif obturateur selon la revendication 5 ou 6, dans lequel les griffes élastiques (50) se projettent à partir de chaque côté longitudinal du corps (55).

8. Dispositif obturateur selon l'une quelconque des revendications précédentes, dans lequel la partie émettrice (5) est réalisée en matière plastique.

9. Dispositif obturateur selon la revendication précédente, dans lequel la partie émettrice (5) est réalisée par injection, de préférence par moulage par compression-injection.

10. Dispositif obturateur selon l'une quelconque des revendications précédentes, dans lequel l'actionneur comprend une extrémité de manivelle (30) couplée à la sortie de celui-ci, et la partie émettrice (5) comprend un logement (54) dans lequel est logée l'extrémité opposée de ladite manivelle (30), de manière que le mouvement de l'actionneur (3) est transmis à la partie émettrice (5).

11. Dispositif obturateur selon l'une quelconque des revendications précédentes, dans lequel le châssis (2) comprend deux ouvertures (28) et une colonne centrale aménagée entre lesdites ouvertures (28), les volets (4) étant aménagés dans lesdites ouvertures (28) et l'actionneur (3) et la partie émettrice (5) étant aménagés dans ladite colonne centrale.

12. Véhicule automobile **caractérisé en ce qu'il** comprend un dispositif obturateur selon l'une quelconque des revendications précédentes.
